# FASCICULE DE BREVET EUROPEEN

(11) **EP 2 694 833 B1**
(45) Date de publication et mention de la délivrance du brevet: **05.10.2016**
(21) Numéro de dépôt: 12703747.1
(22) Date de dépôt: 01.02.2012
(51) Int. Cl.: F16D 55/2265, F16J 3/04, F16D 65/00

(54) **CAPUCHON DE PISTON DE FREIN A DISQUE ET FREIN A DISQUE AINSI EQUIPE**
SCHEIBENBREMSEN-KOLBENDICHTUNGSKAPPE UND SCHEIBENBREMSE DAMIT
DISC BRAKE PISTON CAP AND DISC BRAKE EQUIPPED THEREWITH

(30) Priorité: 04.04.2011 FR 1101022
(43) Date de publication de la demande: 12.02.2014
(73) Titulaire: Chassis Brakes International B.V., 1011 VM Amsterdam (NL)
(72) Inventeur: CHAMPION, Pascal, 49240 Avrille (FR); BARRET, Philippe, 75015 Paris (FR); DAGUZAN, François, 75009 Paris (FR); BINDNER, Thierry, 75020 Paris (FR)
(74) Mandataire: Hurwic, Aleksander Wiktor
(86) Numéro de dépôt international: PCT/EP2012/051690
(87) Numéro de publication internationale: WO 2012/136397

(56) Documents cités:
- EP-A1- 2 208 917
- FR-A1- 2 771 148
- FR-A2- 2 685 749

## Description

### Domaine de l'invention

La présente invention se rapporte à un capuchon de piston de frein à disque interposé entre l'étrier et le piston pour protéger le piston et la portée de l'étrier en sortie de l'alésage recevant le piston contre les agressions (liquides, solides) ce capuchon étant composé d'un soufflet à plis ayant un bord extérieur et un bord intérieur, pour être logé dans une gorge annulaire de l'étrier, au débouché de l'alésage recevant le piston, le bord extérieur du capuchon étant fixé à l'étrier au niveau du côté extérieur de la gorge annulaire et son bord intérieur étant muni d'un bourrelet logé dans une gorge du piston.

Un tel capuchon encore appelé soufflet tronconique, assure l'étanchéité de la zone intérieure du piston du frein dans l'étrier par rapport à l'extérieur tout en permettant au piston d'effectuer les courses de freinage et tenir compte de l'évolution des courses en fonction de l'usure des garnitures de frein.

### Etat de la technique

On connaît déjà selon les documents FR-A-2 685 749 et FR 2 771 148 un tel capuchon de piston de frein à disque en forme de soufflet tronconique reçu dans la gorge annulaire d'extrémité de l'étrier, au-delà de l'alésage du piston. Ce capuchon comporte un premier pli extérieur dont le bord extérieur qui est également celui du capuchon, est fixé à la paroi interne de la gorge. Le pli extérieur est suivi d'un pli intermédiaire puis d'un avant-dernier pli et d'un dernier pli qui est aussi le pli intérieur. Le bord du pli intérieur, est logé dans une gorge du piston. Le capuchon de piston connu est mobile entre une position rétractée correspondant à la position rétractée du piston, dans laquelle, les différents plis sont superposés et une position déployée du piston dans laquelle les plis du capuchon ou soufflet sont déployés axialement et étalés entre la gorge de l'étrier et la celle du piston. Le capuchon protège ainsi la surface du piston et la portée évitant le contact avec des corps étrangers, des liquides et des poussières.

Ce capuchon de piston, connu, comporte un moyen d'aide au repliage de façon à éviter les déchirures du soufflet. En effet, notamment à l'occasion d'un remplacement de garniture de frein, le piston est repoussé dans son alésage. Le capuchon peut ne pas se replier correctement dans la gorge de l'étrier. Il est alors exposé au contact d'éléments métalliques du frein dont la température peut atteindre des valeurs élevées, provoquant après un certain temps la détérioration du soufflet. Celui-ci, une fois déchiré, ne peut plus protéger l'intérieur du piston contre les agressions par des liquides ou des matières solides, poussières ou autres.

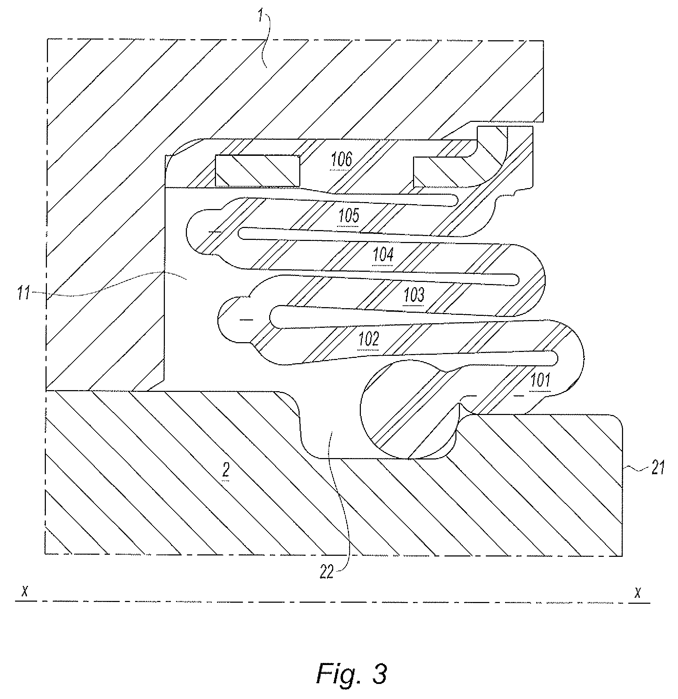

Le capuchon, connu, représenté à la figure 3, comporte cinq plis en allant du petit diamètre vers le grand diamètre: un pli intérieur 101 dirigé vers l'extérieur, un pli intermédiaire 102 dirigé vers l'intérieur, un pli intermédiaire 103 dirigé vers l'extérieur, un pli intermédiaire 104 dirigé vers l'intérieur et enfin, un pli extérieur 105 dirigé vers l'extérieur et un insert surmoulé 106.

### But de l'invention

La présente invention a pour but d'améliorer l'étanchéité du capuchon de piston de frein à disque interposé entre l'étrier et le piston et de développer des moyens pour que l'air chauffé, comprimé, s'échappe et permette :
- au capuchon de se replier correctement lorsque le piston est repoussé dans l'étrier avant la mise en place des plaquettes de frein neuves,
- au capuchon de ne pas sortir de son logement en gonflant sous la pression de l'air chaud emprisonné,
- au piston de frein de fonctionner librement tout en assurant l'étanchéité vis-à-vis des éléments extérieurs et de ne pas être poussé en position de freinage par la pression de l'air chaud emprisonné alors que l'action sur le frein doit être relâchée.

### Exposé et avantages de l'invention

A cet effet, l'invention a pour objet un capuchon de piston de frein à disque du type défini ci-dessus, caractérisé en ce que
- le pli intérieur du capuchon est tourné vers l'intérieur de l'étrier et il est rigidifié par des nervures longitudinales sur sa face appliquée contre le piston.

Grâce au pli intérieur, rigidifié et tourné vers l'intérieur, le mouvement de déploiement se produit entre les plis intermédiaires, de sorte que le pli intérieur ne se déforme pas vers l'extérieur. Cela permet à l'air chauffé par la température de fonctionnement du frein et notamment celle de l'étrier et du piston, de s'échapper entre le piston et le pli intérieur grâce à une répartition favorable de la pression sur le bourrelet.

L'air peut s'échapper non seulement lorsqu'il est chauffé pendant le fonctionnement du frein, mais également lors d'un repliage du capuchon d'autant plus que les nervures rigidifiant le pli intérieur rentrant, facilitent le repliage du capuchon.

Enfin, le bourrelet est fixe et la zone d'étanchéité est maîtrisée car la bavure du plan de joint est en dehors de la zone d'étanchéité.

Selon une autre caractéristique avantageuse, le pli intérieur du capuchon est muni d'un bourrelet et comporte des creux.

Le pli intérieur et par suite le capuchon est ainsi parfaitement tenu sur le piston tout en offrant un passage de fuite à l'air de la gorge annulaire de l'étrier, lorsque cet air est comprimé sous pression du fait de son élévation de température.

D'une manière particulièrement intéressante, les bossages du bourrelet sont constitués par des lamelles.

Les articulations intérieures sont munies de picots pour s'appuyer contre le fond de la gorge annulaire de l'étrier tout en laissant un passage d'air entre les picots.

Les articulations intérieures sont plus précisément le côté des articulations tourné vers le fond de la gorge annulaire de l'étrier. On évite ainsi des contacts à plat entre les articulations du capuchon et cette face de la gorge annulaire de l'étrier. L'étanchéité est rompue et toute la gorge annulaire de l'étrier est à la même pression, c'est-à-dire une pression proche de la pression à l'extérieur.

Sur le côté extérieur du capuchon, c'est-à-dire au niveau de l'insert surmoulé, il est avantageux qu'il soit renforcé par un insert en forme d'anneau plat en acier, muni de trous, pour être enveloppé complètement par la matière du capuchon. On réalise ainsi un accrochage parfait de l'anneau à la matière du capuchon favorisant la tenue du capuchon dans la gorge annulaire de l'étrier.

Le fonctionnement du capuchon est amélioré si au moins un pli intermédiaire rentrant est muni d'au moins une surépaisseur longitudinale sur son côté tourné vers l'extérieur et cette surépaisseur est parallèle à l'axe du capuchon et l'axe de l'étrier de frein recevant ce capuchon.

Il est également avantageux que le capuchon comporte au moins un pli intermédiaire muni près de son articulation intérieure avec le pli voisin, d'une surépaisseur locale, également dirigée longitudinalement, sur son côté tourné vers l'intérieur, et cette surépaisseur locale est de préférence dans une position homologue à celle de la surépaisseur longitudinale du pli.

Avantageusement le pli intermédiaire est muni de plusieurs surépaisseurs longitudinales et de surépaisseurs locales dans des positions homologues, c'est-à-dire de part et d'autre du pli, et ces surépaisseurs soient réparties de manière équiangulaire sur le pli.

Enfin et de manière caractéristique, le capuchon de piston comprend :
- un pli intérieur rentrant relié à un pli intermédiaire par une articulation et bordé par un bourrelet logé dans la gorge du piston,
- un pli intermédiaire relié à un second pli intermédiaire par une articulation, et
- un second pli intermédiaire tourné vers l'intérieur et relié par une articulation à un pli extérieur,
- un pli extérieur dirigé vers l'extérieur et articulé à un insert surmoulé par une articulation,
- un insert surmoulé pour s'appliquer contre la paroi extérieure de la gorge annulaire de l'étrier.

L'invention a également pour objet un frein à disque équipé d'un capuchon tel que défini ci-dessus.

### Dessins

La présente invention sera décrite ci-après de manière plus détaillée à l'aide d'un mode de réalisation d'un capuchon de piston de frein à disque selon l'invention représenté dans les dessins annexés dans lesquels :
- la figure 1 est une demi-coupe axiale d'un étrier de frein et d'un piston de frein en position repliée avec un capuchon selon l'invention,
- la figure 2 est une demi-coupe axiale du capuchon de piston selon l'invention en position dépliée,
- la figure 3 est une section d'un capuchon de piston connu.

### Description d'un mode de réalisation de l'invention

L'invention a pour objet un capuchon de piston de frein à disque logé entre l'étrier et le piston pour séparer le volume à l'extérieur du frein du volume à l'intérieur et protéger le piston.

Le capuchon et le frein à disque qu'il équipe seront décrits ci-après.

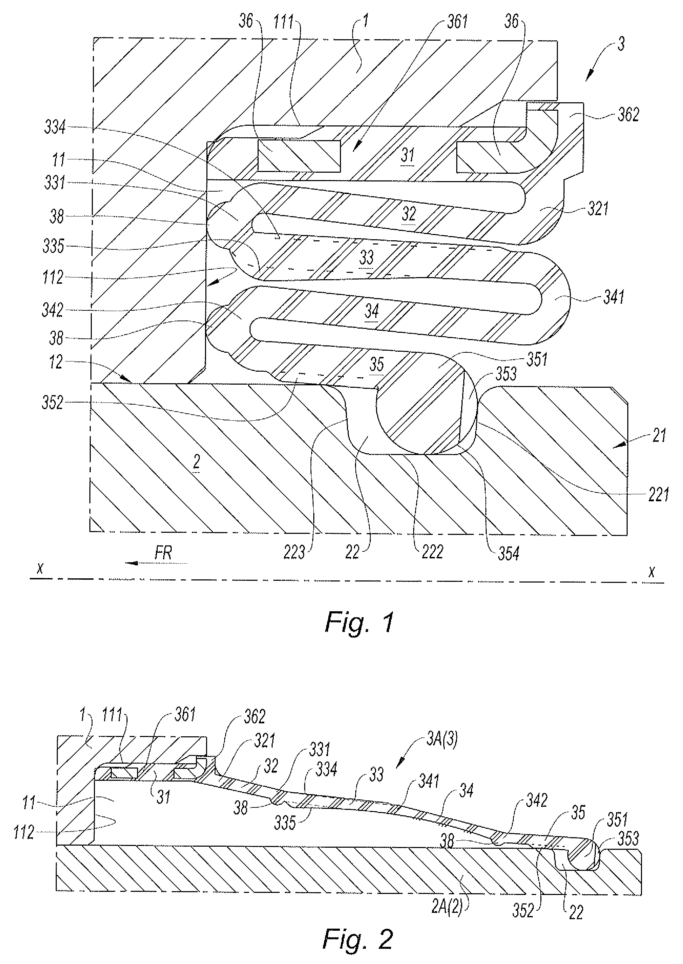

La figure 1 est une demi-coupe axiale de l'étrier 1 du frein à disque au niveau de l'axe x-x du piston 2 reçu dans l'alésage 12. Le piston 2 est un manchon cylindrique dont la face 21 avant s'appuie contre la plaquette de frein suivant une trace en forme de couronne circulaire pour pousser la plaquette contre le disque de frein. La plaquette et le disque de frein non représentés se trouvent sur la partie droite de la figure 1. L'étrier 1 comporte une gorge annulaire 11 recevant le capuchon 3 fixé au piston 2 dans une gorge 22. Le capuchon 3 a une forme de révolution engendré par cette section tournant autour de l'axe x-x.

A l'état complètement déployé selon la figure 2, le capuchon 3 a globalement une forme tronconique 3A, le piston occupant la position 2A.

La section du capuchon 3 à l'état libre ou sa section de moulage correspondent pour l'essentiel à la forme du capuchon installé entre l'étrier 1 et le piston 2 qui est l'état replié ou partiellement replié.

Par convention, le côté extérieur et le côté intérieur sont repérés par rapport à l'axe xx dans la direction radiale, le côté extérieur étant éloigné de l'axe xx et le côté intérieur étant proche de l'axe xx.

De même, par convention, le sens rentrant va de l'extérieur du frein vers l'intérieur dans la direction de la flèche Fr à la figure 1. La direction du sens sortant correspond au sens opposé allant de l'intérieur du frein vers l'extérieur ceci en parcourant le capuchon à partir du bourrelet, vers l'insert surmoulé.

A l'état replié ou partiellement replié, le capuchon 3 a une forme de soufflet avec des plis successifs décrits dans l'ordre partant de l'intérieur du capuchon 3 près de l'axe xx, à savoir :
- un pli intérieur 35 rentrant, relié à un pli intermédiaire 34 par une articulation 342 et bordé par un bourrelet 351 logé dans la gorge 22 du piston 2,
- un pli intermédiaire 34 relié à un autre pli intermédiaire 33 par une articulation 341, et
- un second pli intermédiaire 33 tourné vers l'intérieur et relié par une articulation 331 à un pli extérieur 32,
- un pli extérieur 32 dirigé vers l'extérieur et articulé à un insert surmoulé 31 par une articulation 321,
- un insert surmoulé 31 pour s'appliquer contre la paroi extérieure 111 de la gorge annulaire 11 de l'étrier 1.

Le pli intérieur 35 portant le bourrelet 351 est rentrant, c'est-à-dire tourné vers l'intérieur de la gorge 11 de l'étrier 1 et non vers l'extérieur. En d'autres termes, le pli intérieur 35 est situé entre la gorge 22 du piston 2 et le fond 112 de la gorge annulaire 11.

L'insert surmoulé 31 est constitué d'un insert 36 en forme d'anneau plat en acier, muni de trous 361 et d'un bord extérieur relevé 362 de façon que le caoutchouc du capuchon 3 puisse envelopper complètement l'insert 36. Le sommet des deux articulations 331, 342 respectivement entre les branches 32, 33 et 34, 35 est garni de groupes de picots 38. Les groupes de picots 38 de chaque articulation sont répartis de manière équiangulaire par exemple à 45° en périphérie et les groupes homologues sur deux articulations sont situés sur les mêmes rayons.

Le pli 33 est renforcé sur ses deux faces par les surépaisseurs 334, 335, longitudinales, sensiblement parallèles à l'axe xx. La surépaisseur 334 s'étend sur une partie importante du dessus de la branche 33 alors que la surépaisseur 335 se situe sur le côté intérieur de l'articulation 331.

Les surépaisseurs sont réparties régulièrement dans la direction périphérique du capuchon et d'un côté et de l'autre du pli, elles sont, de préférence, dans des positions homologues, c'est-à-dire dans le même plan axial.

Sur sa face tournée vers le piston 2, le pli intérieur 35 est rigidifié par des nervures longitudinales 352, c'est-à-dire dirigées dans la direction de l'axe x-x (ou sensiblement dans cette direction) de façon que le pli intérieur 35 ne se déplie pratiquement pas vers l'extérieur ; le mouvement de déploiement est assuré par les plis intermédiaires 32, 33, 34. On évite ainsi les inconvénients des joints connus. Les nervures longitudinales 352 créent des canaux entre la surface du piston 2 et le pli intérieur 35 permettant le passage de l'air.

La face avant du bourrelet 351 est munie de canaux 353 facilitant le passage de l'air lorsque le bourrelet 351 est en appui dans la gorge 22 du piston 2.

L'installation du capuchon 3 selon l'invention dans l'étrier 1 et sur le piston 2 se fait comme déjà décrit ci-dessus à savoir, le bord extérieur du joint 3, c'est-à-dire le pli extérieur 31 est fixé à l'étrier 1 et le bord intérieur est introduit par le bourrelet 351 dans la gorge 22 du piston 2. La surface intérieure du pli intérieur 35 peut s'appliquer plus ou moins contre la surface du piston 2, au-delà de la gorge, 22 et les canaux créent des passages dans la direction de l'axe x-x permettant à l'air chaud en pression de s'échapper vers l'extérieur en passant dans ces intervalles, puis, dans la gorge 22 entre le fond 222 et le bourrelet 351 lors de son soulèvement dû à la pression.

Comme le capuchon 3 ou bord arrière est poussé vers l'extérieur sous l'effet de la pression régnant dans la gorge annulaire 11 de l'étrier, le bourrelet 351 est en appui contre le côté avant 221 de la gorge 22 ; les encoches 253 permettent le passage de l'air puisque le bourrelet 351 n'est pas en contact avec le côté intérieur 223 de la gorge 22.

Il convient également de souligner que la bavure 354 du plan de joint du moule dans lequel est fabriqué le capuchon 3, se situe dans l'angle entre le fond 222 et le bord avant 221 de la gorge 22 de sorte que la bavure même irrégulière ne nuit pas à l'étanchéité du montage.

Dans le moule ou en sortie de moule, le pli intérieur 35 est naturellement incliné d'environ 45° par rapport au pli intermédiaire 34 de manière à créer à l'état installé, une force élastique poussant le bourrelet 351 dans le fond 222 de la gorge 22.

L'ensemble de la gorge annulaire 11 communique avec l'extérieur puisque les articulations 331, 342 ne peuvent s'appuyer de manière étanche contre le fond 112 de la gorge 11 du fait des picots 38 et des intervalles qu'ils laissent ainsi entre eux.

En conclusion, le capuchon 3 permet l'équilibrage sensiblement à la pression atmosphérique de la gorge annulaire 11 lorsque l'air y est comprimé lors du repliement du capuchon et/ou que le volume d'air est chaud et sous pression.

L'invention porte ainsi non seulement sur le capuchon, mais également sur l'étrier de frein dont le capuchon constitue une pièce importante, intégrée.

L'invention se rapporte de manière générale aux systèmes de freins équipés de freins à disques.

### NOMENCLATURE DES ELEMENTS PRINCIPAUX

- 1.: Etrier
11 Gorge annulaire
111 Paroi extérieure
112 Fond
12 Alésage du piston
- 2: Piston
21 Face avant
22 Gorge
221 Bord avant de la gorge
222 Fond de la gorge
223 Bord arrière de la gorge
- 3: Joint/capuchon
31 Insert surmoulé
32 Pli extérieur
321 Articulation
33 Pli intermédiaire
331 Articulation
34 Pli intermédiaire
341 Articulation
342 Articulation
35 Pli intérieur
351 Bourrelet
352 Nervure longitudinale
353 Canaux
354 Bavure de plan de ioint
36 Insert
361 Trou
362 Bord extérieur
100 Capuchon connu (figure 3)
101 Pli intérieur
102 Pli intermédiaire
103 Pli intermédiaire
104 Pli intermédiaire
105 Pli extérieur
106 Insert surmoulé

## Revendications

1. Capuchon de piston de frein à disque interposé entre l'étrier (1) et le piston (2) pour protéger le piston contre les agressions (liquides, solides) ce capuchon étant composé d'un soufflet à plis ayant un bord extérieur et un bord intérieur, pour être logé dans une gorge annulaire (11) de l'étrier (1), au débouché de l'alésage (12) recevant le piston (2), le bord extérieur du capuchon étant fixé à l'étrier au niveau du côté extérieur (111) de la gorge annulaire (11) et son bord intérieur étant muni d'un bourrelet logé dans une gorge (22) du piston (2),
capuchon de piston **caractérisé en ce que**
le pli intérieur (35) du capuchon (3) est situé entre la gorge (22) du piston (2) et l'intérieur de l'étrier (1) et il comporte des nervures longitudinales (352) sur sa face appliquée contre le piston (2) permettant le passage de l'air et **en ce que** le pli intérieur (35) relié par une articulation (342) à un pli intermédiaire sortant (34) lui-même relié par une articulation (341) à un pli intermédiaire rentrant (33) relié par une articulation (331) à un pli extérieur (32), sortant, lui-même relié par une articulation (321) à l'insert surmoulé (31), et
les articulations intérieures (331, 342) sont munies de picots (38) pour s'appuyer contre le fond (112) de la gorge annulaire (11) de l'étrier tout en laissant un passage d'air entre les picots.

2. Capuchon de piston de frein selon la revendication 1,
**caractérisé en ce que**
le pli intérieur (35) du capuchon (3) est muni d'un bourrelet (351) et comporte des canaux (353) pour s'appliquer contre le bord avant (221) de la gorge (22) du piston (2).

3. Capuchon de piston de frein selon la revendication 1,
**caractérisé en ce que**
l'insert surmoulé (31) est constitué d'un insert (36) en forme d'anneau plat en acier muni de trous (361) pour être enveloppé complètement par la matière du capuchon.

4. Capuchon de piston de frein selon la revendication 3,
**caractérisé en ce que**
l'insert (36) est muni d'un bord extérieur relevé (362).

5. Capuchon de piston de frein selon la revendication 1,
**caractérisé en ce qu'**
au moins un pli intermédiaire (33) est muni d'au moins une surépaisseur longitudinale (335) sur son côté intérieur, cette surépaisseur étant parallèle à l'axe (xx).

6. Capuchon de piston de frein selon les revendications 1 et 5,
**caractérisé en ce qu'**
au moins un pli intermédiaire (33) est muni près de son articulation (331) avec le pli voisin (32), d'une surépaisseur locale (334) sur le côté extérieur, cette surépaisseur locale étant dans une position homologue à celle de sa surépaisseur longitudinale (335).

7. Capuchon de piston de frein selon la revendication 6,
**caractérisé en ce qu'**
au moins un pli intermédiaire (33) est muni de surépaisseurs longitudinales (334) et de surépaisseurs locales (335) se correspondant, c'est-à-dire que de part et d'autre du pli, ces surépaisseurs sont réparties de manière équiangulaire sur le pli (33).

8. Capuchon de piston de frein selon la revendication 1,
**caractérisé en ce qu'**
il comprend :
- un pli intérieur (35) rentrant, relié à un pli intermédiaire (34) par une articulation (342) et bordé par un bourrelet (351) logé dans la gorge (22) du piston (2),
- un pli intermédiaire (34) relié à un second pli intermédiaire (33) par une articulation (341), et
- un second pli intermédiaire (33) tourné vers l'intérieur et relié par une articulation (331) à un pli extérieur (32),
- un pli extérieur (32) dirigé vers l'extérieur et articulé à un insert surmoulé (31) par une articulation (321),
- un insert surmoulé (31) pour s'appliquer contre la paroi extérieure (111) de la gorge annulaire (11) de l'étrier (1).

9. Frein à disque comportant un capuchon de piston selon l'une des revendications 1 à 8.

## Patentansprüche

1. Scheibenbremsenkolbenkappe, die zwischen dem Bremssattel (1) und dem Kolben (2) angeordnet ist, um den Kolben vor Angriffen (Flüssigkeiten, Feststoffe) zu schützen, wobei diese Kappe aus einem Faltenbalg besteht, der einen Außenrand und einen Innenrand besitzt, um in einer Ringkehle (11) des Bremssattels (1) an der Ausmündung der Bohrung (12), die den Kolben (2) aufnimmt, zu sitzen, wobei der Außenrand der Kappe am Bremssattel in Höhe der Außenseite (111) der Ringkehle (11) befestigt ist und ihr Innenrand mit einem Wulst versehen ist, der in einer Kehle (22) des Kolbens (2) sitzt,
Kolbenkappe, **dadurch gekennzeichnet, dass** die Innenfalte (35) der Kappe (3) sich zwischen der Kehle (22) des Kolbens (2) und dem Inneren des Bremssattels (1) befindet und sie Längsrippen (352) an ihrer gegen den Kolben (2) anliegenden Fläche aufweist, die den Durchgang von Luft gestatten, und dass die Innenfalte (35), die durch ein Gelenk (342) mit einer abgehenden Zwischenfalte (34) verbunden ist, die selbst durch ein Gelenk (341) mit einer eingehenden Zwischenfalte (33) verbunden ist, welche durch ein Gelenk (331) mit einer, abgehenden, Außenfalte (32) verbunden ist, die selbst durch ein Gelenk (321) mit dem aufgeformten Einsatz (31) verbunden ist, und
die Innengelenke (331, 342) mit Spitzen (38) versehen sind, um sich gegen den Boden (112) der Ringkehle (11) des Bremssattels abzustützen, und gleichzeitig einen Luftdurchgang zwischen den Spitzen beizubehalten.

2. Bremskolbenkappe nach Anspruch 1,
**dadurch gekennzeichnet, dass**
die Innenfalte (35) der Kappe (3) mit einem Wulst (351) versehen ist und Kanäle (353) aufweist, um gegen den vorderen Rand (221) der Kehle (22) des Kolbens (2) anzuliegen.

3. Bremskolbenkappe nach Anspruch 1,
**dadurch gekennzeichnet, dass**
der aufgeformte Einsatz (31) aus einem Einsatz (36) in Flachringform aus Stahl, der mit Löchern (361) versehen ist, um vollständig vom Material der Kappe umhüllt zu werden, besteht.

4. Bremskolbenkappe nach Anspruch 3,
**dadurch gekennzeichnet, dass**
der Einsatz (36) mit einem erhöhten Außenrand (362) versehen ist.

5. Bremskolbenkappe nach Anspruch 1,
**dadurch gekennzeichnet, dass**
mindestens eine Zwischenfalte (33) mit mindestens einer Längsverdickung (335) an ihrer Innenseite versehen ist, wobei diese Verdickung parallel zur Achse (xx) ist.

6. Bremskolbenkappe nach den Ansprüchen 1 und 5,
**dadurch gekennzeichnet, dass**
mindestens eine Zwischenfalte (33) in der Nähe ihres Gelenks (331) mit der Nachbarfalte (32) mit einer lokalen Verdickung (334) an der Außenseite versehen ist, wobei diese lokale Verdickung sich in einer Position befindet, die zu der ihrer Längsverdickung (335) homolog ist.

7. Bremskolbenkappe nach Anspruch 6,
**dadurch gekennzeichnet, dass**
mindestens eine Zwischenfalte (33) mit einander entsprechenden Längsverdickungen (334) und lokalen Verdickungen (335) versehen ist, das heißt, dass diese Verdickungen an beiden Seiten der Falte in gleichen Winkelabständen auf der Falte (33) verteilt sind.

8. Bremskolbenkappe nach Anspruch 1,
**dadurch gekennzeichnet, dass**
sie umfasst:
- eine eingehende Innenfalte (35), die mit einer Zwischenfalte (34) durch ein Gelenk (342) verbunden ist und durch einen Wulst (351), der in der Kehle (22) des Kolbens (2) sitzt, begrenzt wird,
- eine Zwischenfalte (34), die mit einer zweiten Zwischenfalte (33) durch ein Gelenk (341) verbunden ist, und
- eine zweite Zwischenfalte (33), die nach innen gewandt ist und durch ein Gelenk (331) mit einer Außenfalte (32) verbunden ist,
- eine Außenfalte (32), die nach außen gerichtet ist und an einem aufgeformten Einsatz (31) durch ein Gelenk (321) angelenkt ist,
- einen aufgeformten Einsatz (31), um gegen die Außenwand (111) der Ringkehle (11) des Bremssattels (1) anzuliegen.

9. Bremsscheibe, die eine Kolbenkappe nach einem der Ansprüche 1 bis 8 aufweist.

## Claims

1. Disc brake piston cap interposed between the caliper (1) and the piston (2) to protect the piston against attack (from liquids and solids), this cap being made up of a bellows-style concertina-folded boot having an outer edge and an inner edge to be housed in an annular groove (11) of the caliper (1) at the mouth of the bore (12) accommodating the piston (2), the outer edge of the cap being fixed to the caliper at the outer side (111) of the annular groove (11) and its inner edge being provided with a bulge housed in a groove (22) of the piston (2),
the piston cap being **characterized in that** the inner fold (35) of the cap (3) is situated between the groove (22) of the piston (2) and the inside of the caliper (1) and has longitudinal ribs (352) on its face pressed against the piston (2) to allow air to pass and **in that** the inner fold (35) is connected by an articulation (342) to an outwardly facing intermediate fold (34) itself connected by an articulation (341) to an inwardly facing intermediate fold (33) connected by an articulation (331) to an outwardly facing outer fold (32), itself connected by an articulation (321) to the overmoulded insert (31), and
the inner articulations (331, 342) are equipped with studs (38) to press against the bottom (112) of the annular groove (11) of the caliper while allowing air to pass between the studs.

2. Brake piston cap according to Claim 1,
**characterized in that**
the inner fold (35) of the cap (3) is equipped with a bulge (351) and comprises channels (353) to press against the front edge (221) of the groove (22) of the piston (2).

3. Brake piston cap according to Claim 1,
**characterized in that**
the overmoulded insert (31) consists of an insert (36) in the form of a flat steel ring provided with holes (361) so that it can be completely enveloped with the material of the cap.

4. Brake piston cap according to Claim 3,
**characterized in that**
the insert (36) is equipped with a turned-up outer edge (362).

5. Brake piston cap according to Claim 1,
**characterized in that**
at least one intermediate fold (33) is provided with at least one longitudinal additional thickness (335) on its inner side, this additional thickness being parallel to the axis (xx).

6. Brake piston cap according to Claims 1 and 5,
**characterized in that**
at least one intermediate fold (33) is equipped near its articulation (331) to the next fold (32), with a local additional thickness (334) on the outer side, this local additional thickness being in a position that is the homologue of that of its longitudinal additional thickness (335).

7. Brake piston cap according to Claim 6,
**characterized in that**
at least one intermediate fold (33) is equipped with longitudinal additional thicknesses (334) and with local additional thicknesses (335) that correspond to one another, which means to say that, on each side of the fold, these additional thicknesses are equiangularly distributed along the fold (33).

8. Brake piston cap according to Claim 1,
**characterized in that**
it comprises:
- an inwardly facing inner fold (35), connected to an intermediate fold (34) by an articulation (342) and bordered by a bulge (351) housed in the groove (22) of the piston (2),
- an intermediate fold (34) connected to a second intermediate fold (33) by an articulation (341), and
- a second intermediate fold (33) facing inwards and connected by an articulation (331) to an outer fold (32),
- an outwardly facing outer fold (32) articulated to an overmoulded insert (31) by an articulation (321),
- an overmoulded insert (31) to press against the outer wall (111) of the annular groove (11) of the caliper (1).

9. Disc brake comprising a piston cap according to one of Claims 1 to 8.
